(19) Europäisches Patentamt / European Patent Office / Office européen des brevets

(11) **EP 3 121 240 A1**

(12) **EUROPEAN PATENT APPLICATION**

(43) Date of publication:
**25.01.2017   Bulletin 2017/04**

(51) Int Cl.:
*C09K 5/04* *(2006.01)*    *A23L 3/36* *(2006.01)*

(21) Application number: **15382373.7**

(22) Date of filing: **20.07.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Ideas Hub, S.L.**
**08007 Barcelona (ES)**

(72) Inventor: **Terrado Pablo, Ramon Jose**
**08197 Valldoreix (ES)**

(74) Representative: **ZBM Patents - Zea, Barlocci & Markvardsen**
**Plaza Catalunya, 1 2nd floor**
**08002 Barcelona (ES)**

(54) **A REFRIGERANT COMPOSITION**

(57)    The invention refers to a composition comprising a mixture of difluoromethane, propylene, and a non-halogenated hydrocarbon refrigerant gas selected from dimethylether and propane, wherein: a) the amount of difluoromethane is comprised from 5 to 27% by weight of the total weight of the refrigerant gas combination; b) the amount of the non-halogenated hydrocarbon compound is comprised from 2 to 10% by weight of the total weight of refrigerant gas combination; c) the amount of propylene is comprised from 63 to 93% by weight of the total weight of refrigerant gas combination; and being the sum of the components of the refrigerant gas combination of 100% by weight; a refrigerant system containing thereof; and a refrigerant process using the composition.

EP 3 121 240 A1

**Description**

The present invention relates to the field of heat transfer compositions. Particularly, to enviromentally-friendly refrigerant composition containing a non-ozone-depleting mixture of refrigerant gas combination. The invention also relates to processes for cooling articles; and refrigerant systems containing it.

BACKGROUND ART

Refrigeration and freezing equipment is the energy system more used in our society today. This low-temperature equipment includes fast freezing of organic compounds such as food and biological samples or inorganic compounds such as metals and alloys. The required temperatures for refrigeration are in the range from -30°C to -40°C, or even lower from -60°C to -80°C. A large variety of freezing processes have been previously disclosed. These processes can comprise the direct-contact or indirect-contact of the refrigerant agent with the product to be frozen. Indirect-contact freezing methods involve cooling the surface that is in contact with the product to be frozen; or cooling the air/inert gas that is in the vicinity of the product to be frozen; or cooling the liquid in which the product to be freeze is immersed.

These freezing processes are carried out in cooling systems for low-temperature circuits. In this low-temperature processes, the difference between the temperature at which heat is rejected and the temperature at which refrigeration is required is so large that a single stage refrigeration process is insufficient to go down to those low temperatures. Therefore, a two-stage or cascade refrigeration process has to be used. In these processes, the first step comprises going down the temperature from room temperature to a range from -30°C and -40°C; and the second step of the process comprises going down the temperature from the range of -30°C and-40°C to a temperature range from -60°C to -80°C. These processes are carried out in a cascade system comprising two separate refrigeration circuits: the high-temperature circuit (HTC) and the low-temperature circuit (LTC).

Besides, the conditions of the freezing process have a great influence on achieving an appropriate freezing process from the economical, energy, environmentally, and viable point of view. Some of the fast-freezing processes known in the art still affect the texture of the frozen article and accelerate their deterioration. Further, biological samples and food can be damaged due to an inappropriate thermal chock. This damage can seriously compromise the viability of some biological samples, for instance oocytes, stem cells, and tissues.

On the other hand, the use of the above mentioned cascade refrigerant systems involve a significant economic impact with huge annual electricity consumption. The energy consumption of the equipment represents about 15% of worldwide electricity use and this percentage is even higher in some developed countries. One of the solution to reduce the economic impact of the refrigerant systems is the building of more integrated and controlled systems of energy consumption in order to avoid leakage of the refrigerants to the environment. Alternatively, other option is the improvement of the energy-efficient (coefficient of performance) of refrigerant system, thus reducing the electricity consumption per unit.

In order to overcome the previous limitations, faster freezing processes have been developed based on the designing refrigerants having high refrigeration efficiency/capacity for very low temperature processes. Unfortunately, most of the refrigerants commonly used such as chlorofluorocarbons (CFCs) had a negative impact against the environment due to the emissions of halogenated chemical refrigerants which cause a global and ozone-depleting effect.

Due to the environmental problems caused by the used of CFCs, these substances were replaced by less harmful refrigerant agents, for instance, first by hydrochlorofluorocarbons (HCFCs) such as chlorodifluoromethane (R-22) and later on by hydrofluorocarbons (HFC) such as trifluoromethane (R-23). Unfortunately, HCFCs also have a high global warming potential (GWP), and a ODP lower than the ODP of CFCs but still high enough to justify the placing out of the above mentioned HCFCs and due to the powerful greenhouse effect of R-23, the European Commission has also banned the use of R-23 for some specific applications.

As an alternative to the previous refrigerant substances, liquid nitrogen has also been used as refrigerant. Commonly, it has been used in open systems comprising spraying the liquid nitrogen over the product to be cooled after it has been precooled or conditioned in the nitrogen gas. However, the use of liquid nitrogen in closed systems has been discarded due to its complicated implementation and their huge energy consumption.

Another alternative refrigerant substance used is difluoromethane (R-32). R-32 is a hydrofluorocarbon that has zero ozone depletion potential. R-32 has been used alone or in form of mixtures with other refrigerant agents. Binary azeotropic mixtures of difluoromethane (R-32) and pentafluoroethane (R-125) known as R-410 are commercially available as refrigerant for air conditioning equipment having no impact on the ozone layer. Disadvantageously, the use of R-410 contributes to global warming. Other mixture of R-32 has been developed. Particularly, the ternary non-azeotropic mixture of difluoromethane (R-32), pentafluoroethane (R-125), and 1,1,1,2-tetrafluoroethane (R-134) is also commercially available as refrigerant R-407 for air conditioning equipment. Unfortunately, the above mentioned binary and ternary mixtures of R-32 cannot be used as refrigerants for low temperature systems below -60°C. Further, a mixture of 30% by weight of R-32 and 70% by weight of propylene (R-1270) having a high refrigerant capacity for refrigerant system for temperatures comprised from -30°C to-50°C has been disclosed in the state of the art. However, this mixture does not provide an appropriate cooling for being used at an industrial scale.

Therefore, from what is known in the art it is derived that there is still the need of providing an enviromentally-friendly cooling compositions having a high refrigeration efficiency/capacity for an efficient refrigeration at very low temperatures and appropriate to be used at industrial scale.

SUMMARY OF THE INVENTION

Inventors have developed an enviromentally-friendly composition comprising a specific mixture of difluoromethane (R-32), propylene (R-1270), and a non-halogenated hydrocarbon compound selected from dimethyle ether (R-E170) and propane (R-290). This compositon is useful as refrigerant in high low-temperature industrial scale processes and has a high refrigeration efficiency.

Further, the composition of the invention can be incorporated in existing refrigerant systems without being modified, because it is compatible with the commonly used refrigeration equipment (for instance pistons, compressors, and evaporator/condenser) and can work below the maximum pressure that the commercial equipment (compressors) can work, that is 19 absolute bars. Besides, the composition of the invention allows reducing the time of the refrigeration process by 30 to 40%. This is advantegeous over the processs of the state of the art because a faster refrigeration allows maintaining the properties of the article to be frozen without compromizing their viability after thawing.

Thus, a first aspect of the present invention relates to a composition comprising a mixture of difluoromethane, propylene, and a non-halogenated hydrocarbon refrigerant gas selected from dimethylether and propane, wherein: a) the amount of difluoromethane is comprised from 5 to 27% by weight of the total weight of the refrigerant gas combination; b) the amount of the non-halogenated hydrocarbon compound is comprised from 2 to 10% by weight of the total weight of refrigerant gas combination; c) the amount of propylene is comprised from 63 to 93% by weight of the total weight of refrigerant gas combination; and being the sum of the components of the refrigerant gas combination of 100% by weight.

A second aspect of the present invention relates to the use of the composition of the first aspect of the invention as a refrigerant.

A third aspect of the present invention relates to a refrigerant system comprising the refrigerant composition of the first aspect of the invention.

A fourth aspect of the invention relates to a refrigeration process comprising going down the temperature of an article to a range from -30°C to -40°C using the system as defined in the second aspect of the invention, whereinbefore initiating the refrigeration of the article, the system is at a temperature ranging from -30°c to -40°C.

BRIEF DESCRIPTION OF THE DRAWINGS

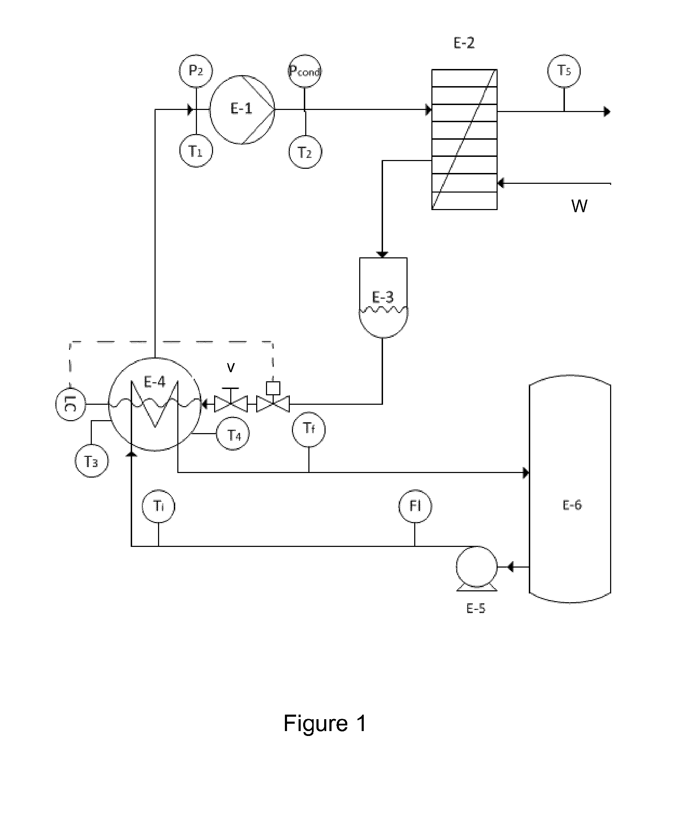

Figure 1. is a simplified schematic drawing of the first step of a cascade refrigerant system having the refrigerant composition of the invention. Letters and numbers of the scheme represent the following: W represents the inlet of refrigeration water of the system; V represents an expansion valve; T1 represents the gas temperature at the compressor inlet; T2 represents the gas temperature at the compressor outlet; T3 represents the refrigerant composition temperature in the first heat exchanger; T4 represents the refrigerant composition temperature in the second heat exchanger; T5 represents refrigerant composition condensing temperature; Ti represents the second fluid temperature at the inlet of the system; Tf represents represents the second fluid temperature at the outlet of the system; Fl represents the flow mass metter of secondary fluid; LC represents the level control at the fludded evaporator; E-1 represents a piston compressor of the first stage of the process; E-2 represents a plate condenser; E-3 represents a buffer tank for condensed refrigerant composition; E-4 represents flooded evaporator/condenser; E-5 represents a centrifugal pump; E-6 represents buffer tank of the secondary circuit; P2 represents absolute pressure of the gas at the inlet compressor; and Pcond represents absolute pressure gas condensing at the exhaust of compressor. The temperatures mentioned above are expressed in celcius degrees (°C); and the absolute pressure mentioned above is expresses in bars.

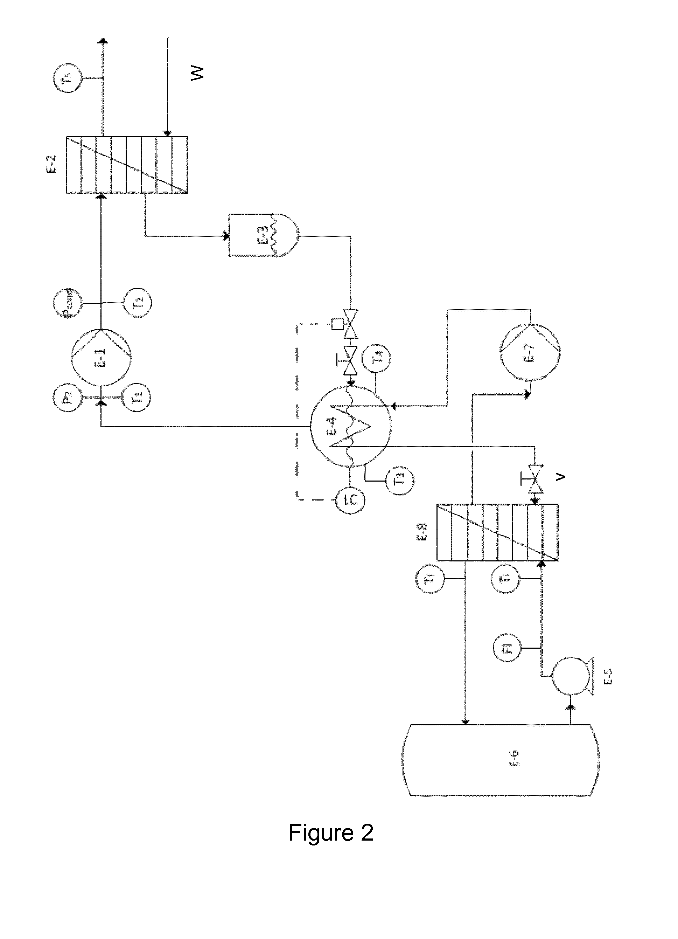

Figure 2. is a simplified schematic drawing of the two-stage cascade process of the present invention. Letters and numbers of the scheme represent the following: E-7 represents a piston compressor of the second stage of the process; and E-8 represents an evaporator plate heat transfer. The letters W, V, T1, T2, T3, T4, T5, Ti, Tf, Fl, LC, E-1, E-2, E-3, E-4, E-5, E-6, P2, and Pcond have the same meaning as disclosed in Figure 1. The temperatures mentioned above are expressed in celcius degrees (°C); and the absolute pressure mentioned above is expresses in bars.

DETAILED DESCRIPTION OF THE INVENTION

All terms as used herein in this application, unless otherwise stated, shall be understood in their ordinary meaning as known in the art. Other more specific definitions for certain terms as used in the present application are as set forth below and are intended to apply uniformly through-out the specification and claims unless an otherwise expressly set out definition provides a broader definition.

In the context of the invention, the term "non-halogenated hydrocarbon refrigerant gas" includes both refrigerant gasses dimethylether and propane as it is disclosed in the state of the art. Retrieved from https://en.wikipedia.org/wiki/List_of_refrigerants (July 15th 2015).

The terms "difluoromethane", "R-32", and "HFC 32", have the same meaning and are used interchangeable. In particular, "R-32" has the molecular formula $CH_2F_2$ (CAS number 75-10-5).

The terms "propylene", "R-1270" and "propene", have the same meaning and are used interchangeable. In particular, "R-1270" has the structure $CH_3CH=CH_2$ (CAS number 115-07-1).

The terms "dimethylether" and "R-E170", have the same meaning and are used interchangeable. In particular, "R-E170" has the structure $CH_3$-O-$CH_3$ (CAS number 115-10-6).

The terms "propane" and "R-290", have the same meaning and are used interchangeable. In particular, "R-290" has the structure $CH_3$-$CH_2$-$CH_3$ (CAS number 74-98-6).

The terms "COP" or "coefficient of performance" have the same meaning and are used interchangeable. The COP of a cooling pump is a ratio of cooling provided to electrical energy consumed at a specyfic temperature. Higher values of COPs equate to lower operating costs. Values of COPs of diferents refrigerants are determined in the heat exchanger when the refrigerant in the compressor inlet is in its totality in gas form, the process of compression is an isoentopic process, and the process of expansion in the expansion valve is an isoentalpic process.

The value of COP is calculated by the ratio of the heat removed from the cold reservoir to input work by the following equation:

$$COP = Q \,/\, E$$

wherein Q is the heat removed from the cold reservoir, and E is the work consumed by the cooling pump. The Q value is calculated by the following equation:

$$Q = W_{cs} \cdot Cp_{CS} \cdot (T_f - T_i)$$

wherein $W_{cs}$ is the flow mass metter of secondary fluid; $Cp_{cs}$ is the specific heat of the secondary fluid at a constant temperature and constant pressure; $T_f$ is the outlet temperature in the secondary fluid heat exchanger; and $T_i$ is the inlet temperature in the secondary fluid heat exchanger. And, the E value is the electrical consumption that is calculated by measuring it in each phase by an electrometer installed in the system.

The terms "volumetric efficiency" and "$\eta_v$" have the same meaning and are used interchangeable. The volumetric efficiency is the ratio of the quantity of air that is trapped by the cylinder during induction over the swept volume of the cylinder under static conditions. Values of volumetric efficiency are calculated by the cool absorbed by the secondary circuit (Q) and the compressor volume flow (V) by the following equation:

$$\eta_v = Q \cdot V$$

being V equal to 11.4 $m^3$/h for the specifyc compessor used for the present invention.

The term "F factor" refers to the energy transport of the compressor respect to the energy consumption. Higher values of F equate to maximum energy transport of the compressor with minimum energy consumption. The "F factor" is calculated by the following equation:

$$F = COP \cdot \eta_v$$

As mentioned above, the present invention refers to an environmetally friendly refrigerant composition that allows carrying out a high-velocity refrigeration of either organic or inorganic compounds. The refrigerant composition of the invention which comprises the specific mixture of difluoromethane, propylene, and a non-halogenated hydrocarbon compound selected from dimethyl ether and propane, particularly as an unique refrigerant gas combination mentioned above, has the appropriate energy capacity for being used as refrigerant in high-velocity refrigeration processes at industrial scale. Particularly, the composition of the first aspect of the invention has a coefficient of performance comprised from 0.95 and 1.50 and a volumetric coefficient of thermal expansion at 0°C comprised from 450 and 915 KJ/m$^3$.

As It can be seen in the Examples, in comparison with the refrigerant compositions commonly used in the prior art that contains one of two of the components of the refrigerant gas combination of the invention, only the refrigerants that comprises the specific gas combination of R-32, R1270 and R-E170 or alternatively of R-32, R1270 and R-290 have the appropriate values of coefficient of performance (COP), volumetric efficiency ($\eta_v$), F factor and Pcond to be used as refrigerant in compositions for high-velocity low-temperature applications either for energy or for environmental reasons.

In an embodiment, optionally in combination with one or more features of the various embodiments described above or below, the refrigerant composition of the invention is that wherein the mixture of difluoromethane, propylene, and a non-halogenated hydrocarbon refrigerant gas selected from dimethylether and propane is the unique refrigerant gas combination of the composition.

In an embodiment, optionally in combination with one or more features of the various embodiments described above or below, the refrigerant composition of the invention is that wherein the composition consists of the refrigerant gas combination as defined in the first aspect of the invention.

In an alternative embodiment, optionally in combination with one or more features of the various embodiments described above or below, the refrigerant composition of the invention is that wherein the hydrocarbon refrigerant is dimethylether.

In another alternative embodiment, optionally in combination with one or more features of the various embodiments described above or below, the refrigerant composition of the invention is that wherein the hydrocarbon refrigerant is propane.

In another embodiment, optionally in combination with one or more features of the various embodiments described above or below, the refrigerant composicition of the invention is that wherein difluoromethane is in an amount comprised from 10 to 27% by weight of the total weight of combination; the hydrocarbon refrigerant is in an amount comprised from 2 to 10% by weight of the total weight of combination; and propylene is in an amount comprised from 63 to 88% by weight of the total weight of combination, preferably the hydrocarbon refrigerant is propane.

In another embodiment, optionally in combination with one or more features of the various embodiments described above or below, the refrigerant composition of the invention is that wherein the amount of difluoromethane is comprised from 20 to 27% by weight of the total weight of combination; the amount of the non-halogenated hydrocarbon compound is comprised from 2 to 6% by weight of the total weight of combination; the amount of propylene is comprised from 67 to 78% by weight of the total weight of combination; and being the sum of the components of the combination of 100% by weight; preferably the hydrocarbon refrigerant is propane.

In another embodiment, optionally in combination with one or more features of the various embodiments described above or below, the refrigerant composition of the invention is that wherein the amount of difluoromethane is comprised from 20 to 24% by weight of the total weight of combination; the amount of the non-halogenated hydrocarbon compound is comprised from 4 to 6% by weight of the total weight of combination; the amount of propylene is comprised from 72 to 74% by weight of the total weight of combination; and being the sum of the components of the combination of 100% by weight; preferably the hydrocarbon refrigerant is propane.

In another embodiment, optionally in combination with one or more features of the various embodiments described above or below, the refrigerant composition of the invention comprises 24% by weight of the total weight of the combination of difluoromethane; 4% by weight of the total weight of combination of the non-halogenated hydrocarbon compound; and 72% by weight of the total weight of combination of propylene. In a preferred embodiment, optionally in combination with one or more features of the various embodiments described above or below, the refrigerant composition of the invention comprises 24% by weight of the total weight of the combination of difluoromethane; 4% by weight of the total weight of combination of propane; and 72% by weight of the total weight of combination of propylene. As it is shown in the Examples, this particular refrigerant composition is advantegeous because it has a coefficient of performance of 1.04, a volumetric coefficient of thermal expansion of 503.47 KJ/m$^3$ and a Pcond value of 18.7 absolute bars at -40°C (cf. Example 4). It is advantageous because this composition is an efficient refrigerant for being used in high-low temperature refrigerant process at industrial scale in the commonly-used industrial equipment.

In another embodiment, optionally in combination with one or more features of the various embodiments described above or below, the refrigerant composition of the invention comprises 20% by weight of the total weight of the combination of difluoromethane; 4% by weight of the total weight of combination of the non-halogenated hydrocarbon compound; and 76% by weight of the total weight of combination of propylene. In a preferred embodiment, optionally in combination with one or more features of the various embodiments described above or below, the refrigerant composition of the invention comprises 20% by weight of the total weight of the combination of difluoromethane; 4% by weight of the total weight of combination of propane; and 76% by weight of the total weight of combination of propylene. As it is shown in the Examples, this particular refrigerant composition is advantegeous because it has a coefficient of performance of 1.07, a volumetric coefficient of thermal expansion of 512.99 KJ/m$^3$ and a Pcond value of 18.7 absolute bars at -40°C (cf. Example 2). It is advantegeous because this composition has a maximum energetic transport of the compressor with the minimum energy consumption renders it available for its used as efficient refrigerant composition at industrial scale.

In an embodiment, optionally in combination with one or more features of the various embodiments described above or below, the refrigerant composition that comprises the mixture of difluoromethane, propylene, and a non-halogenated hydrocarbon refrigerant gas of the first aspect of the invention, further comprises one or more additional refrigeration gases, non-refrigerant additives and mixtures thereof compatible with the components of the refrigerant gas combination of the invention.

In an embodiment, the refrigerant composition of the invention is that wherein the composition further comprises one or more additional refrigeration gases selected from the group consisting of ethan (R-170) and ethene (R-1150).

In an embodiment, the refrigerant composition of the invention is that wherein the composition further comprises one or more non-refrigerant additives selected from the group consisting of a lubricant, an extreme pressure additive, an anti-wear additive, an antioxidant, a high-temperature stabilizer, a corrosion inhibitor, a detergent, an anti-foaming agent, a flame retardant and combination thereof.

In an embodiment, the refrigerant composition of the invention is that wherein the composition further comprises a mixture of one or more additional refrigeration gases and one or more non-refrigerant additives as defined in the present invention.

In an embodiment, optionally in combination with one or more features of the various embodiments described above or below, the refrigerant composition that comprises the mixture of difluoromethane, propylene, and a non-halogenated hydrocarbon refrigerant gas of the first aspect of the invention as the unique refrigerant gas combination, further comprises one or more non-refrigerant additives compatible with the components of the refrigerant gas combination of the invention as defined above.

The second aspect of the invention refers to the use of the composition of the first aspect of the invention as a refrigerant. Particularly, the composition of the invention is useful as a refrigerant for very low temperature cascade refrigaration process at industrial scale because of its high refrigeration efficiency/capacity and enviromentally-friendly properties.

The third aspect of the invention refers to a refrigerant system comprising the refrigerant composition as defined in the first aspect of the invention. It is advantegeous because the refrigeration process of the invention is carried out under such reaction conditions that are compatible with any existing refrigerant equipment. It means there is no need of adapting the existig equipment, it is only needed to change the existing refrigerant of the system for the composition of the invention.

The appropriate refrigerant equipment for the present invention can be any system known in the state of the art for carrying out a high-velocity direct-contact or indirect-contact freezing process. Examples of suitable high-velocity freezing systems include, but are not limited to, cold room; continuos or discontinuous cold tunnel; and liquid immesion freezing.

The fourth aspect of the invention refers to a refrigerantion process comprising the use of the composition as defined above. The refrigeration process comprising going down the temperature in the range from -30°C to-40°C. In comparison to the processes of the state of the art, the reduction of the temperature is carried out in a short period of time (minutes)involving a reduced energy consumption but with a high coefficient of performance, a high volumetric coefficient of thermal expansion and appropriate condensation pressure. The process of the invention comprises going down the temperature of an article to a range from -30°C to -40°C using the system as defined above, wherein before initiating the refrigeration of the article, the system is at a temperature ranging from -30°c to -40°C. The composition of the invention allows reducing the time of the refrigeration process by 30 to 40%.

The process of the invention involves the indirect-contact of the refrigerant agent with the product to be frozen. Indirect-contact freezing methods involve cooling the surface that is in contact with the product to be frozen; or alternatively cooling the air/inert gas that is in the vicinity of the product to be frozen; or alternatively cooling the liquid in which the product to be freeze is immersed.

In an embodiment, optionally in combination with one or more features of the various embodiments described above or below, the process as defined in the fourth aspect of the invention further comprises an additional step (ii) which comprises going down the temperatyre from -30°C to -40°C to -80°C to -90°C using an appropiate refrigerant compound. Examples of appropriate refrigerant compounds for step (ii) include, but are not limited to, ethene (R-1150), ethan (R-170), methan (R-50) and fluoromethane (R-41); preferably ethene (R-1150).

In an embodiment, optionally in combination with one or more features of the various embodiments described above or below, the process of the invention is that wherein the article is selected from an organic compound and an inorganic compound.

In an embodiment, optionally in combination with one or more features of the various embodiments described above or below, the process of the invention is that wherein the article is an organic compound selected from the group consisting of food product and biological material isolated from living beings.

In an alternative embodiment, optionally in combination with one or more features of the various embodiments described above or below, the process of the invention is that wherein the article is a food product. The term "food product" refers to any food which can be stored and/or eaten in frozen state. These food products can be vegetable- and animal-derived food products or processed vegetable- and animal-derived food products. Examples of food products include, but are not limited to, meat; seafood such as fish and shellfish; fruit; vegetable; milk and derivates such as ice-cream and yoghurt; bakery such as doughs, batters and cakes; culinary products such as soup, sauce, pizza, compote, mashed potato and tomato paste. The process of the invention is advantegeous in the food industry because it allows reducing the freezing time mantaining the organoleptic properties of the frozen food product, and reducing their deterioration.

In an embodiment, optionally in combination with one or more features of the various embodiments described above or below, wherein when the article is a food product, then the process comprises going down the temperature of an article to a range from -30°C to -40°C using the system as defined above, wherein initiating the refrigeration of the article is carried out at the same time as the refrigeration of the system (alternative (b)).

In an alternative embodiment, optionally in combination with one or more features of the various embodiments described above or below, the process of the invention is that wherein the article is a biological material isolated from living beings. The term "living beings" includes human beings, animals and plants. In a particular embodiment, the process of the invention is that wherein the biological material can be a plant-, animal-, and human-isolated sample. Examples of biological material isolated from plants include, but are not limited to, leaves, stems, root and cell culture. Examples of biological material isolated from animals and human beings include, but are not limited to, plasma, serum, blood, organs, cells culture, oocyte, zygote, sperm, umbilical cord, and stem cells. The process of the invention is advantegeous in pharmacy and biotechnology industry because it allows reducing the freezing time avoiding the loss of viability of the frozen biological material after being defrosting.

In an embodiment, optionally in combination with one or more features of the various embodiments described above or below, the process of the invention is that wherein the article is an inorganic compound selected from the group consisting of metal and alloys. In a particular the process of the invention is that wherein the metal is iron or iron alloys. Processes for preparing metal and metal alloys comprises several heating steps. Other processes that also comprises heating steps are grinding, welding and machining of metals. These heating steps can determine the dimensions and the structure of the final metallic product. In order to avoid overheating of the material, refrigerant periods are required. The control of the temperature and the time of the refrigerant periods are crucial for the quality of the final metal material. The process of the invention is advantegeous in the metallurgy industry to reduce the time of the refrigeration periods and having an appropriate quality of the metallic product.

Throughout the description and claims the word "comprise" and variations of the word, are not intended to exclude other technical features, additives, components, or steps. Furthermore, the word "comprise" encompasses the case of "consisting of". Additional objects, advantages and features of the invention will become apparent to those skilled in the art upon examination of the description or may be learned by practice of the invention. The following examples and drawings are provided by way of illustration, and they are not intended to be limiting of the present invention. Reference signs related to drawings and placed in parentheses in a claim, are solely for attempting to increase the intelligibility of the claim, and shall not be construed as limiting the scope of the claim. Furthermore, the present invention covers all possible combinations of particular and preferred embodiments described herein.

EXAMPLES

**1. Refrigerant composition**

**1A. Composition**

Table 1 shows the qualitative and quantitative composition of the refrigerant compositions 1-8 of the present invention and the comparative refrigerant compositions 1-12.

Table 1

| Composition | Ingredients | Concentration (% by weight) | GWP |
|---|---|---|---|
| Comparative Example 1 | R-1270 | 100 | 2 |

(continued)

| Composition | Ingredients | Concentration (% by weight) | GWP |
|---|---|---|---|
| Comparative Example 2 | R-290 | 100 | 3 |
| Comparative Example 3 | R-1270:R-32 | 75:25 | 139 |
| Comparative Example 4 | R-1270:R-32 | 70:30 | 166,4 |
| Comparative Example 5 | R-1270:R-E170 | 90:10 | 1,9 |
| Comparative Example 6 | R-1270:R-E170 | 80:20 | 1,8 |
| Comparative Example 7 | R-E170:R-32 | 90:10 | 55,9 |
| Comparative Example 8 | R-E170:R-32 | 70:30 | 165,7 |
| Comparative Example 9 | R-290:R-32 | 80:20 | 112,4 |
| Comparative Example 10 | R-290:R-32 | 75:25 | 139,75 |
| Comparative Example 11 | R-290:R-32:R-E170 | 72:24:4 | 134,2 |
| Comparative Example 12 | R-290:R-32:R-E170 | 69:23:8 | 128,65 |
| Example 1 | R-1270:R-32:R-E170 | 78:20:2 | 111,58 |
| Example 2 | R-1270:R-32:R-E170 | 76:20:4 | 111,56 |
| Example 3 | R-1270:R-32:R-E170 | 74:20:6 | 111,54 |
| Example 4 | R-1270:R-32:R-E170 | 72:24:4 | 133,48 |
| Example 5 | R-1270:R-32:R-E170 | 69:23:8 | 127,96 |
| Example 6 | R-1270:R-32:R-E170 | 67:27:6 | 149,9 |
| Example 7 | R-1270:R-32:R-290 | 76:20:4 | 111,56 |
| Example 8 | R-1270:R-32:R-290 | 74:20:6 | 111,54 |

**1 B. Preparation Process**

The comparative Example compositions 1-2 comprise only one pure refrigerant (R1270 and R290 respectively. These pure ingredients are commercially available (GTS Autogas Nord, Sovegas Spa, Irop. Fluor shanghai International Trade Co. Ltd).

The refrigerant compositions of the present invention 1-8 and the comparative refrigerant compositions 3-12 disclosed in sections 1A, that comprises a mixture of ingredients were prepared following the process as defined above.

i) Bottle inertization

A 61 L bottle was inerted by nitrogen sweep done to remove all impurities/trace contaminants such as air. The volume of nitrogen to be circulated through the bottle must be at least 2 times the volume of the container (that was 122 litres). Then, the nitrogen contained inside the bottle was removed by vacuum until achieving at least an absolute pressure of 5 mbar.

ii) Bottle filling

The ingredients of the compositions as defined in section 1 A were added from the lowest to highest equilibrium pressure. With the help of a scale, the amount of the ingredients to be added was controlled. Particularly, the accuracy of the scale was 0.001 Kg. The exact amount of each ingredient added in the bottle was the weight difference between the bottle before adding the product and after its addition.

Whenever an ingredient was added, the bottle was shaken to ensure that the ingredients were dissolved homogeneously.

**2. Refrigeration process**

The cascade refrigeration process comprises two cooling stages, who work in series. The first step of the cascade refrigeration process involves going down the temperature to a range from -30°C and -40°C using the refrigerant compositions of the invention or the comparative refrigerant compositions as defined in section 1A. The second step of the cascade involves going down the temperature from -30°C to -40°C to -80°C to -90°C using an appropriate refrigerant compound, such as for example ethylene.

The refrigeration process was carried out following the steps defined above.

i) Refrigerant system conditioning

The refrigerant system of Fig.1 was inerted by nitrogen swooped done to remove all impurities/trace contaminants such as air. The volume of nitrogen to be circulated through the system must be at least 2 times the volume contained in the system. Then, the nitrogen contained inside the system was removed by vacuum until achieving at least an absolute pressure of 5 mbar.

ii) Refrigerant system filling

Once the system was conditioned, the refrigerant compositions of section 1A were added in liquid phase to ensure that the composition of the mixture in the system is the same as inside the bottle. While the refrigerant composition is slowly added, the compressor was also started. The addition finished when the level sensor flooded act exchanger indicated that there was enough refrigerant composition inside the system.

iii) Refrigeration step

Once the system was conditioned and filled, the system was turned on and the temperature was going down until a range comprised from -30°C to -40°C.

When the system is at that temperature range (-30°C to -40°C), an article to be frozen was introduced inside the refrigerant system (i.e. cold room, continuos cold tunnel, discontinuous cold tunnel and liquid immesion freezing).

In comparison to the refrigerant composition of the state of the art, the required time for achieving the target temperature in the refrigerant system which comprises the refrigerant composition of the present invention was reduced by 30% to 40%.

**3. Determination of energy consumption**

The coefficient of performance (COP), compressor volumetric efficiency ($\eta_v$), F coefficient and the absolute pressure gas condensing (Pcond) of the first stage of the cascade refrigeration process comprising refrigeration from -30°C to -40°C were calculated.

Values of Pcond, COP, $\eta_v$, and F coefficient were calculated when the system includes one of the refrigerant compositions of section 1A, and the system is working at stationary regimen.

Table 2 shows the Pcond, COP, $\eta_v$, and F coefficient wherein the system is working at the following stationary regimen conditions: the refrigerant composition temperature in the second heat exchanger (T4) was -42±1°C; the refrigerant composition condensing temperature (T5) was 30±3°C; and the secondary fluid temperature at the outlet of the system (Tf) was -40±1°C.

**Table 2**

| Composition | Pcond (Absolute bar) | COP | $\eta_v$ (KJ/m$^3$) | F (COP·$\eta_v$) |
|---|---|---|---|---|
| Comparative Example 1 | 13.5 | 1.03 | 382.95 | 392.88 |
| Comparative Example 2 | 11.3 | 1.02 | 316.89 | 324.49 |
| Comparative Example 3 | 19.5 | 0.96 | 496.10 | 478.14 |
| Comparative Example 4 | 20.1 | 1.05 | 565.26 | 593.53 |
| Comparative Example 5 | 12.2 | 1.05 | 364.50 | 382.48 |
| Comparative Example 6 | 11.9 | 1.01 | 339.65 | 341.41 |
| Comparative Example 7[b] | - | - | - | - |

(continued)

| Composition | Pcond (Absolute bar) | COP | $\eta_v$ (KJ/m$^3$) | F (COP·$\eta_v$) |
|---|---|---|---|---|
| Comparative Example 8 | 10.3 | 0.87 | 221.56 | 191.90 |
| Comparative Example 9[a] | 21.1 | 1.00 | 559.92 | 557.74 |
| Comparative Example 10[a] | 21.7 | 1.00 | 582.43 | 580.65 |
| Comparative Example 11 | 19.3 | 0.96 | 514.20 | 495.43 |
| Comparative Example 12 | 19.3 | 0.94 | 455.28 | 426.22 |
| Example 1 | 18.0 | 1.03 | 501.03 | 516.20 |
| Example 2 | 17.2 | 1.07 | 512.99 | 548.26 |
| Example 3 | 17.2 | 0.96 | 447.24 | 430.89 |
| Example 4 | 18.7 | 1.08 | 547.35 | 592.93 |
| Example 5 | 18.5 | 1.04 | 503.47 | 524.64 |
| Example 6 | 18.7 | 1.05 | 530.96 | 557.96 |
| Example 7 | 18.0 | 0.95 | 458.37 | 433.43 |
| Example 8 | 18.0 | 1.06 | 528.11 | 558.97 |

[a] The mixture is unstable and the separation of both gases occurred.
[b] It was impossible to carry out this experiment because the mixture did not reach the scheduled temperature of -40°C

Table 3 shows the Pcond, COP, $\eta_v$, and F coefficient at -30°C, wherein the system is working at the following stationary regimen conditions: the refrigerant composition temperature in the second heat exchanger (T4) is-33±1°C; the refrigerant composition condensing temperature (T5) is 30±3°C; and the secondary fluid temperature at the outlet of the system (Tf) is - 30±1°C.

**Table 3**

| Composition | Pcond (absolute bar) | COP | $\eta_v$ (KJ/m$^3$) | F (COP·$\eta_v$) |
|---|---|---|---|---|
| Comparative Example 1 | 13.5 | 1.43 | 676.81 | 967.03 |
| Comparative Example 2 | 11.0 | 1.36 | 536.30 | 728.62 |
| Comparative Example 3 | 20.0 | 1.30 | 843.16 | 1098.16 |
| Comparative Example 4 | 20.5 | 1.29 | 876.83 | 1133.44 |
| Comparative Example 5 | 13.0 | 1.45 | 676.72 | 979.84 |
| Comparative Example 6 | 12.2 | 1.44 | 636.15 | 918.65 |
| Comparative Example 7 | 12.2 | 0.91 | 245.91 | 223.97 |
| Comparative Example 8 | 9.6 | 1.50 | 484.32 | 728.24 |
| Comparative Example 9[a] | 20.8 | 1.27 | 834.64 | 1063.11 |
| Comparative Example 10[a] | 22.3 | 1.26 | 924.40 | 1163.85 |
| Comparative Example 11 | 20.5 | 1.25 | 841.77 | 1053.44 |
| Comparative Example 12 | 20.2 | 1.23 | 753.40 | 924.13 |
| Example 1 | 18.6 | 1.45 | 912.04 | 1323.66 |
| Example 2 | 18.0 | 1.48 | 904.41 | 1335.17 |
| Example 3 | 18.0 | 1.45 | 880.89 | 1279.80 |
| Example 4 | 18.7 | 1.39 | 872.01 | 1216.14 |
| Example 5 | 18.3 | 1.38 | 838.93 | 1160.78 |

(continued)

| Composition | Pcond (absolute bar) | COP | $\eta_v$ (KJ/m$^3$) | F (COP·$\eta_v$) |
|---|---|---|---|---|
| Example 6 | 18.8 | 1.30 | 815.19 | 1062.80 |
| Example 7 | 18.4 | 1.38 | 861.05 | 1185.74 |
| Example 8 | 19.0 | 1.36 | 848.67 | 1157.75 |
| [a] The mixture is unstable and the separation of both gases occurred. | | | | |

The results disclosed in Tables 2 and 3 show that only the compositions of the invention which comprises the specific combination of R-32, R1270, and R-E170 or R290 have the appropriate values of coefficient of performance (COP), volumetric efficiency ($\eta_v$), F factor and Pcond to be used as refrigerant combination in refrigerant compositions in low-temperature applications for energy, security and environmental reasons. Particularly, the use of the compositions of the invention in two-stage cascade systems including high-velocity freezing and storage of frozen foods.

As it is shown in Tables 2 and 3, neither the binary combination between R-32, R1270, and R-E170 (cf. comparative Examples 3-8) nor the ternary combination of R-32:R-E170:R-290 (cf. comparative Examples 11-12) do not have the energy efficiency required to be used as refrigerant in low-temperature circuits. Further, the binary combination of R-32:R-1270 (cf. comparative Examples 3-4) and the ternary combination of R-290:R-32:RE170 (cf. comparative Examples 11-12) involve an increase of COP value but also of the Pcond above 19 absolute bars. Further, the binary combination of R-32:R-290 are unstable (cf. comparative Examples 9-10) and the separation of both gases occurred when the system was stopped. Consequently, the electrical consumption increased. Additionally, the binary combination of R-1270:R-E170 (cf. comparative Examples 5 and 6) and the binary combination of R-32:R-E170 (cf. comparative Examples 7 and 8) have a low volumetric efficiency value.

In conclusion, only the compositions of the invention have the appropriate energy efficiency without compromising the GWP value for being used at industrial scale in high-velocity refrigerant systems with food, chemistry-biotechnology or metallurgic applications.

## Claims

1. A composition comprising a mixture of difluoromethane, propylene, and a non-halogenated hydrocarbon refrigerant gas selected from dimethylether and propane, wherein:

   a) the amount of difluoromethane is comprised from 5 to 27% by weight of the total weight of the refrigerant gas combination;
   b) the amount of the non-halogenated hydrocarbon compound is comprised from 2 to 10% by weight of the total weight of refrigerant gas combination;
   c) the amount of propylene is comprised from 63 to 93% by weight of the total weight of refrigerant gas combination; and
   being the sum of the components of the refrigerant gas combination of 100% by weight.

2. The composition according to claim 1, wherein the mixture of difluoromethane, propylene, and a non-halogenated hydrocarbon refrigerant gas selected from dimethylether and propane is the unique refrigerant gas combination of the composition.

3. The composition according to any of the claims 1-2, wherein the composition consists of the mixture of difluoromethane, propylene, and a non-halogenated hydrocarbon refrigerant gas selected from dimethylether and propane.

4. The composition according to any of the claims 1-3, wherein the non-halogenated hydrocarbon refrigerant gas is dimethylether.

5. The composition according to any of the claims 1-4, wherein:

   the amount of difluoromethane is comprised from 10 to 27% by weight of the total weight of the refrigerant gas combination;
   the amount of non-halogenated hydrocarbon compound is comprised from 2 to 10% by weight of the total weight of the refrigerant gas combination; and

the amount of propylene is comprised from 63 to 88% by weight of the total weight of the refrigerant gas combination.

6. The composition according to any of the claims 1-5, wherein:

the amount of difluoromethane is comprised from 20 to 27% by weight of the total weight of the refrigerant gas combination;
the amount of non-halogenated hydrocarbon compound is comprised from 2 to 6% by weight of the total weight of the refrigerant gas combination; and
the amount of propylene is comprised from 67 to 78% by weight of the total weight of the refrigerant gas combination.

7. The composition according to any of the claims 1-6, wherein:

the amount of difluoromethane is in comprised from 20 to 24% by weight of the total weight of the refrigerant gas combination;
the amount of non-halogenated hydrocarbon compound is comprised from 4 to 6% by weight of the total weight of the refrigerant gas combination; and
the amount of propylene is comprised from 72 to 74% by weight of the total weight of the refrigerant gas combination.

8. The composition according to any of the claims 1-7, comprising:

20% by weight of the total weight of the the refrigerant gas combination of difluoromethane;
4% by weight of the total weight of the refrigerant gas combination of the non-halogenated hydrocarbon compound; and
76% by weight of the total weight of the refrigerant gas combination of propylene.

9. The composition according to any of the claims 1-7, comprising:

24% by weight of the total weight of the the refrigerant gas combination of difluoromethane;
4% by weight of the total weight of the refrigerant gas combination of the non-halogenated hydrocarbon compound; and
72% by weight of the total weight of the refrigerant gas combination of propylene.

10. Use of the composition of any of the claims 1-9 as a refrigerant.

11. A refrigerant system comprising the composition as defined in any of the claims 1-9.

12. The refrigerant system according to claim 11, which is selected from cold room, continuos cold tunnel, discontinuous cold tunnel and liquid immesion freezing.

13. A refrigeration process comprising going down the temperature of an article to a range from -30°C to -40°C using the system as defined in any of the claims 11-12, wherein before initiating the refrigeration of the article, the system is at a temperature ranging from -30°c to -40°C.

14. The refrigeration process according to claim 13, further comprising an additional step (ii) which comprises going down the temperature from -30°C to -40°C to -80°C to -90°C using an appropiate refrigerant compound.

15. The refrigeration process according to any of the claims 13-14, wherein the article is an organic compound selected from the group consisting of food product and biological material isolated from living beings.

Figure 1

Figure 2

Europäisches
Patentamt

European
Patent Office

Office européen
des brevets

# EUROPEAN SEARCH REPORT

Application Number

EP 15 38 2373

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KR 2006 0009186 A (KOREA ADVANCED INST SCI & TECH [KR]) 31 January 2006 (2006-01-31) <br> * page 2, lines 20-23 * <br> * page 4, lines 6-8 * <br> * claims 1,2 * | 1-15 | INV. <br> C09K5/04 <br> A23L3/36 |
| A | KR 100 924 426 B1 (JUSEONG TECHNO PARK [KR]; KIM IL KYUNG [KR]) 29 October 2009 (2009-10-29) <br> * claims 1,2; tables 1-5 * | 1-15 | |
| A | WO 2014/004665 A2 (GWS ENERGY INC [US]) 3 January 2014 (2014-01-03) <br> * claims * | 1,10,11 | |
| A | US 6 001 273 A (MINOR BARBARA HAVILAND [US] ET AL) 14 December 1999 (1999-12-14) <br> * claims 1-3,6; example 1 * | 1,10,11 | |
| A | US 2012/216551 A1 (MINOR BARBARA HAVILAND [US] ET AL) 30 August 2012 (2012-08-30) <br> * the whole document * | 1,10,11, 13 | |

| | |
|---|---|
| | TECHNICAL FIELDS SEARCHED (IPC) |
| | C09K <br> A23L |

The present search report has been drawn up for all claims

| Place of search | Date of completion of the search | Examiner |
|---|---|---|
| The Hague | 19 January 2016 | Puetz, Christine |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 15 38 2373

This annex lists the patent family members relating to the patent documents cited in the above-mentioned European search report.
The members are as contained in the European Patent Office EDP file on
The European Patent Office is in no way liable for these particulars which are merely given for the purpose of information.

19-01-2016

| Patent document cited in search report | | Publication date | Patent family member(s) | | Publication date |
|---|---|---|---|---|---|
| KR 20060009186 | A | 31-01-2006 | NONE | | |
| KR 100924426 | B1 | 29-10-2009 | NONE | | |
| WO 2014004665 | A2 | 03-01-2014 | US 2015322320 | A1 | 12-11-2015 |
| | | | WO 2014004665 | A2 | 03-01-2014 |
| US 6001273 | A | 14-12-1999 | US 6001273 | A | 14-12-1999 |
| | | | US 6531441 | B1 | 11-03-2003 |
| | | | US 2004014621 | A1 | 22-01-2004 |
| US 2012216551 | A1 | 30-08-2012 | AR 078902 | A1 | 14-12-2011 |
| | | | AU 2010315264 | A1 | 03-05-2012 |
| | | | CA 2779093 | A1 | 12-05-2011 |
| | | | CN 102686957 | A | 19-09-2012 |
| | | | CO 6541600 | A2 | 16-10-2012 |
| | | | EP 2591296 | A2 | 15-05-2013 |
| | | | JP 2013510286 | A | 21-03-2013 |
| | | | KR 20120102673 | A | 18-09-2012 |
| | | | RU 2012122709 | A | 10-12-2013 |
| | | | TW 201124687 | A | 16-07-2011 |
| | | | US 2012216551 | A1 | 30-08-2012 |
| | | | WO 2011056824 | A2 | 12-05-2011 |

EPO FORM P0459

For more details about this annex : see Official Journal of the European Patent Office, No. 12/82